# EUROPEAN PATENT SPECIFICATION

(11) **EP 0 972 948 B1**
(45) Date of publication and mention of the grant of the patent: **02.03.2005**
(21) Application number: 99305555.7
(22) Date of filing: 13.07.1999
(51) Int. Cl.: F15B 13/02, F15B 21/08, F15B 13/08

(54) **Pressure control valve for solenoid valve aggregate and solenoid valve assembly provided with the same**
Druckregelventil für ein Magnetventilaggregat und damit ausgerüstete Magnetventilanordnung
Régulateur de pression pour un agrégat à électrovannes et assemblage d'électrovannes muni avec celui-ci

(30) Priority: 14.07.1998 JP 19904698
(43) Date of publication of application: 19.01.2000
(73) Proprietor: SMC CORPORATION, Minato-ku, Tokyo (JP)
(72) Inventor: Narita, Masaru, c/o SMC Corp. Tsukuba Tech. Center, Tsukuba-gun, Ibaraki (JP); Hayashi, Bunya, c/o SMC Corp. Tsukuba Tech. Center, Tsukuba-gun, Ibaraki (JP); Ishikawa, Makoto, SMC Corp. Tsukuba Tech. Center, Tsukuba-gun, Ibaraki (JP)
(74) Representative: Findlay, Alice Rosemary

(56) References cited:
- DE-A- 1 798 425
- DE-A- 2 022 462
- DE-B- 1 259 662
- FR-A- 2 015 430
- US-A- 2 651 324
- US-A- 3 225 781
- GÖTZ ET AL: "Hydraulik in Theorie und Praxis" 1995 , ROBERT BOSCH GMBH , DE,STUTTGART XP002138021 * page 261, column 1; figures * * page 266, paragraph 3.1; figures *

## Description

The present invention relates to a pressure control valve for use with a solenoid valve aggregate having a plurality of solenoid valves arranged side by side in a line, and a solenoid valve assembly equipped with the same. Pressure control valves which are apt for such use are known for instance from DE-A-2 022 462.

With fluid pressure equipment, the pressure of fluid supplied to the equipment may need to be adjusted according to a set pressure or an operating condition of the equipment. To adjust the supplied fluid pressure, it is necessary to install a pressure control valve such as a pressure reducing valve in a pipe through which fluid is supplied to or discharged from the fluid pressure equipment.

However, when fluid is supplied to respective parts of fluid pressure equipment by a solenoid valve aggregate having a plurality of solenoid valves arranged side by side in a line, it would require a large installation space and increase cost to install pressure control valves in the pipes of each solenoid valve in the solenoid valve aggregate. Further, if fluid at the same pressure is supplied to a plurality of parts of the fluid pressure equipment via a plurality of pressure control valves, then overlapping equipment would occupy an installation space, resulting in a disadvantage costwise.

An object of the present invention is to provide a pressure control valve that can be placed between a solenoid valve aggregate, which has a plurality of solenoid valves arranged side by side in a line, and a supply-exhaust block for supplying and discharging a pressure fluid to the solenoid valves, and to provide a solenoid valve assembly that incorporates such a pressure control valve.

A further object of the present invention is to provide a pressure control valve that permits a supply-exhaust block and a solenoid valve aggregate, which have already been employed conventionally, to be used as they are with the valve placed therebetween so as to enable supply of fluid the pressure of which has been reduced from the solenoid valves of the solenoid valve aggregate.

Another object of the present invention is to provide a pressure control valve that allows a different secondary pressure to be supplied by each set of a plurality of sets of solenoid valve aggregates in simple fashion, and to provide a solenoid valve assembly that incorporates such a pressure control valve.

According to the present invention, there is provided a pressure control valve for supplying a fluid at a regulated pressure to a supply passage of a solenoid valve aggregate, the aggregate having a plurality of solenoid valves arranged side by side in a line through which the supply passage and a discharge passage extend and a supply-exhaust block having a supply port through which the pressure fluid is supplied and an exhaust port, the pressure control valve comprising a body with an input port for communication with the supply port of the supply-exhaust block, an output port for communication with the supply passage of the solenoid valve aggregate, a pressure regulating mechanism that regulates the pressure of pressure fluid supplied through the supply port of the supply-exhaust block and outputs the fluid at a secondary pressure to the supply passage of the solenoid valve aggregate through the output port, and an exhaust passage that provides direct communication between the discharge passage of the solenoid valve aggregate and the exhaust port of the supply-exhaust block, wherein the input port and the output port are provided adjacent each other through formation by a partition which divides a hole extending within the control valve body, the input port extending to one side of the valve body that faces the solenoid valve aggregate and the output port extending to the other side of the valve body that faces the supply-exhaust block, and wherein the valve includes an end wall for closing off the input port on the said one side and for closing off the output port on the said other side.

Further, a solenoid valve assembly in accordance with the present invention is provided with a solenoid valve aggregate that has a plurality of solenoid valves arranged side by side in a line and a supply passage and a discharge passage installed therethrough, the pressure control valve that supplies a pressure fluid, the pressure of which has been regulated, through the supply passage, a supply-exhaust block that has a supply port through which a pressure fluid is supplied from the outside and an exhaust port to the outside, and a coupling means for coupling the solenoid valve aggregate, the pressure control valve, and the supply-exhaust block arranged side by side in a line.

In the solenoid valve assembly, a plurality of sets of the solenoid valve aggregates, the pressure control valves, and the supply-exhaust blocks may be coupled by a single coupling means. A plurality of sets of solenoid valve aggregates for outputting different fluid pressures can be incorporated in a single solenoid valve assembly.

Further, the pressure regulating mechanism in the pressure control valve may be constructed such that a valve hole is provided in the body of a control valve in parallel to a surface adjacent the solenoid valve aggregate. A pressure regulating valve rod is slidably inserted in the valve hole, the pressure regulating valve rod being equipped with a valve member that moves into and out of contact with a valve seat provided at the valve hole so as to open or close the passage between the input port and the outport port. Both ends of the pressure regulating valve rod are provided with valve rod urging means for setting the opening of the valve seat by the valve member according to the force of action based on a fluid pressure at the output port and an urging force of a pressure regulating spring that sets the secondary pressure and for regulating the secondary pressure to a set value by the pressure regulating spring.

A pressure control value for a solenoid valve aggregate having the configuration set forth above is placed between a supply-exhaust block that has a supply port for a pressure fluid from the outside and an exhaust port to the outside and the solenoid valve aggregate having a plurality of juxtaposed solenoid valves, to provide a solenoid valve assembly. In the solenoid valve assembly, the pressure fluid supplied through the supply port of the supply-exhaust block is introduced into the pressure regulating mechanism from the input port in the control valve body, reduced in pressure to a predetermined secondary pressure set by the pressure regulating spring, sent to the respective solenoid valves through the supply passage of the solenoid valve aggregate from the output port, and sent from the solenoid valves to respective actuators in fluid pressure equipment. The fluid pressure equipment is exhausted from the exhaust passage of the solenoid valve aggregate through the exhaust path of the control valve body and the exhaust port of the supply-exhaust block.

Since the pressure control valve is placed between the supply-exhaust block and the solenoid valve aggregate, a supply-exhaust block and a solenoid valve aggregate that have already been employed can be used as they are to provide the solenoid valve aggregate that supplies air at reduced pressure. Moreover, a plurality of sets of the supply-exhaust blocks, the pressure control valves, and the solenoid valve aggregates can be coupled by a single coupling means to set a different secondary pressure at the pressure control valve for each set of the solenoid valve aggregate, thereby providing various fluid pressures required in the fluid pressure equipment. This achieves a markedly simpler configuration compared with a case wherein a pressure control valve is provided in the passage of each solenoid valve.

The invention will now be described by way of example and with reference to the accompanying drawings in which:
Fig. 1 is a sectional view showing a first embodiment of a pressure control valve for a solenoid valve aggregate in accordance with the present invention.
Fig. 2 is a top plan view showing an example of the configuration of a solenoid valve assembly equipped with the pressure control valve.
Fig. 3 is a front view of the foregoing solenoid valve assembly.

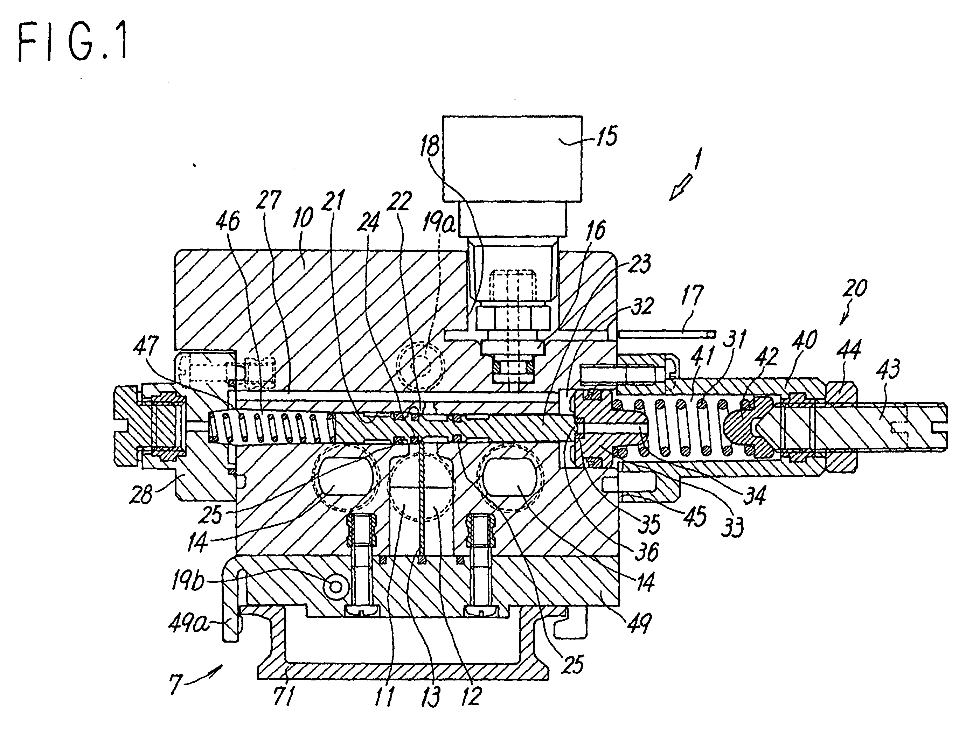

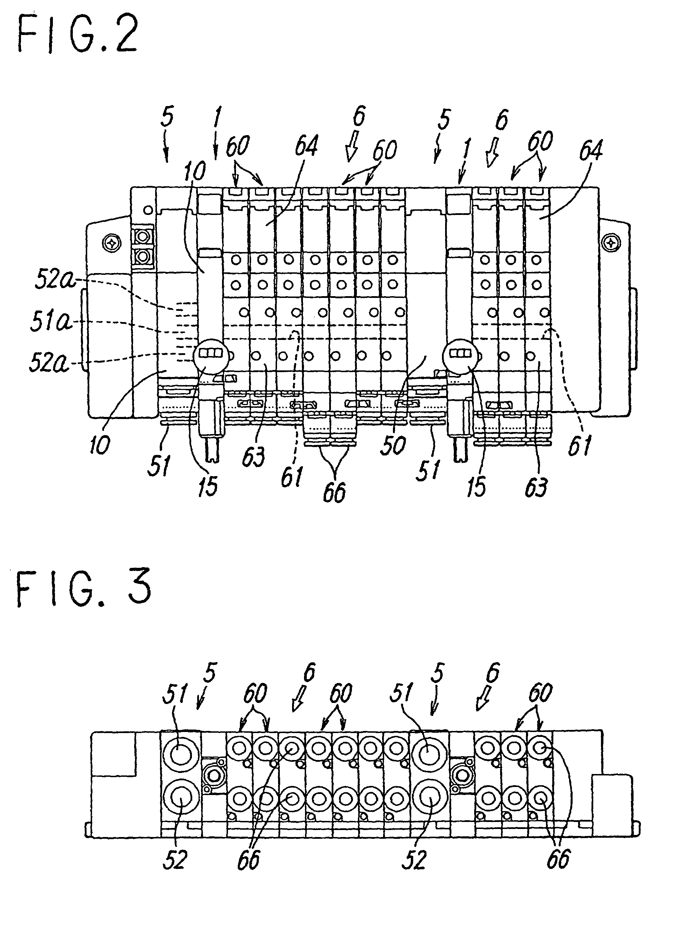

Fig. 1 shows the configuration of a pressure control valve for a solenoid valve aggregate in accordance with the present invention, and Fig. 2 and Fig. 3 illustrate an example of the configuration of a solenoid valve assembly equipped with the same.

A pressure control valve 1 shown in Fig. 1 is provided between a supply-exhaust block 5, which has a supply port 51 and an exhaust port 52 for a pressure fluid, and a solenoid valve aggregate 6 constituted by a plurality of solenoid valves 60 arranged side by side in a line as can be seen from Fig. 2 and Fig. 3, and it supplies the pressure fluid, which has been regulated to a required secondary pressure, to the respective solenoid valves 60 in the solenoid valve aggregate 6. These supply-exhaust block 5, the pressure control valve 1, and the solenoid valve aggregate 6 are installed consecutively into one piece by a coupling means 7 (Fig. 1) which will be discussed later.

As shown in Fig. 1, a control valve body 10 of the pressure control valve 1 is equipped with an input port 11 in communication with the supply port 51 of the supply-exhaust block 5, an output port 12 which is formed at the input port 11 via a partition 13 and in communication with a supply passage 61 (Fig. 2) installed through the solenoid valve aggregate 6, and two exhaust passages 14 positioned on both sides thereof.

Meanwhile, the supply-exhaust block 5 has an inlet passage 51a for a pressure fluid supplied from the outside through the supply port 51, the inlet passage 51a being opened at the position corresponding to the input port 11 and the output port 12 of the control valve body 10, and an exhaust outlet passage 52a for discharge through the exhaust port 52, the outlet passage 52a being opened at a position corresponding to a pair of the exhaust passages 14 in the control valve body 10.

Although it is not shown, in order to link the input port 11 in the control valve body 10 only to the inlet passage 51a of the supply-exhaust block 5, the end of the output port 12 of the control valve body 10 that faces the supply-exhaust block 5 is closed at the end wall, while the end of the input port 11 of the control valve body 10 that faces the solenoid valve aggregate 6 is closed at the end wall in order to link the output port 12 in the control valve body 10 only to the supply passage 61 of the solenoid valve aggregate 6.

The supply-exhaust block 5 may have the input ports 11 and the output ports 12 opened in the pressure control valves 1 and the solenoid valve aggregates 6 located on both sides thereof as necessary; in this embodiment, however, the case where the input port 11 and the output port 12 are opened only in the pressure control valve 1 joined to one side thereof is shown.

Meanwhile, the respective solenoid valves 60 making up the solenoid valve aggregate 6 are formed of main valves 63 and pilot valves 64, the supply passage 61 installed through the main valves 63 and discharging passages located in parallel to both sides thereof being provided (not shown). The main valve 63 is equipped with a supply port for a pressure fluid in communication with the supply passage 61, first and second output ports, and first and second discharge ports in communication with the discharge passage, and it has a well-known switching valve mechanism wherein the passage between the ports is switched by a valve body driven by the pilot valve 64. Hence, the pressure fluid which has the pressure thereof regulated in the pressure control valve 1 and has been introduced through the supply passage 61 is supplied by the operation of the pilot valve 64 to a required actuator in the fluid pressure equipment through one of paired output ports 66 and 66 provided at one end of each solenoid valve 60, and discharged through the discharge passage by the switching operation of the valve body of the pilot valve. The solenoid valve may be formed of a three-port valve.

With this arrangement, the inlet passage 51a and the supply passage 61 are linked, and the outlet passage 52a and the discharge passage of the solenoid valve aggregate 6 are also linked, so that when the supply-exhaust block 5 and the solenoid valve aggregate 6 are directly connected without placing the pressure control valve 1 therebetween, a well-known solenoid valve assembly is configured in which the fluid pressure introduced from the supply port 51 is directly supplied to the fluid pressure equipment through the solenoid valve 60. This means that the solenoid valve assembly in accordance with the present invention can be constructed by placing the pressure control valve 1 between the supply-exhaust block 5 and the solenoid valve aggregate 6 in the solenoid valve assembly that has conventionally been used.

The control valve body 10 of the pressure control valve 1 has been approximated in appearance to the solenoid valve 60 as much as possible; it is equipped with a pressure regulating mechanism 20 that regulates the pressure of the pressure fluid supplied through the input port 11 from the supply port 51 and the inlet passage 51a of the supply-exhaust block 5, and outputs a secondary pressure through the output port 12 to the supply passage 61 of the solenoid valve aggregate 6.

The pressure regulating mechanism 20 has a valve hole 21 provided in the control valve body 10 in parallel to the surface of junction to the solenoid valve aggregate 6 and also in parallel to the axis of the valve body of the solenoid valve 60. A pressure regulating valve rod 23 is slidably inserted in the valve hole 21; the pressure regulating valve rod 23 is equipped with a valve member 24 that moves, from the input port 11 side, into contact with or away from a valve seat 22 provided between the input port 11 and the output port 12 at the valve hole 21 so as to open or close the passage between the input port 11 and the output port 12; and the pressure regulating valve rod 23 is provided with a valve rod urging means for regulating the fluid pressure at the output port 12, that is, the secondary pressure, to the value set by a pressure regulating spring 31. In Fig. 1, reference numeral 25 denotes sealing members in the valve hole 21 that are located on both sides of the valve member 24.

The urging means of the valve rod opens or closes the valve seat 22 by means of the valve member 24 according mainly to the force of action based on the fluid pressure (secondary pressure) at the output port 12 and the urging force of the pressure regulating spring 31 that sets the secondary pressure. A pressure regulating passage 27 in communication with the output port 12 is provided in parallel to the valve hole 21, and the pressure regulating passage 27 and one end of the valve hole 21 are interconnected in an end cover 28 installed at one end of the control valve body 10, while the other end of the pressure regulating passage 27 is opened to a pressure regulating piston chamber 32 formed at the end of the valve hole 21 in the control valve body 10. The pressure regulating piston chamber 32 is formed by inserting a pressure regulating piston 33 in the hole formed in the end of the control valve body 10. A relief hole 34 is provided at the center of the pressure regulating piston 33, a pressure regulating sealing member 35 is provided at the end thereof facing the pressure regulating piston chamber 32, and a valve section 36 is formed at the end of the pressure regulating valve rod 23 and disposed such that it faces against and moves into contact with or away from the pressure regulating sealing member 35.

The outer side of the pressure regulating piston 33 is covered by a pressure regulating case 40 coupled to the control valve body 10. In a spring chamber 41 formed by and in the pressure regulating case 40, the pressure regulating spring 31 is placed between the pressure regulating piston 33 and a spring seat 42, and the spring seat 42 is inserted such that it can be moved in the axial direction thereof for making adjustment by a pressure regulating screw 43 threaded onto the distal end of the pressure regulating case 40. The relief hole 34 provided in the pressure regulating piston 33 links the pressure regulating piston chamber 32 to the spring chamber 41 in the pressure regulating case 40 when the valve section 36 is released, the spring chamber 41 being in communication with the outside through a breather hole 45. In the drawing, reference numeral 44 denotes a locknut.

Further, the pressure regulating valve rod 23 is urged in the direction for pressing the valve member 24 into contact with the valve seat 22 by a spring 47 provided in a compressed state in a pressure chamber 46 formed on the side facing the end cover 28 of the valve hole 21.

Meanwhile, a pressure display unit 15 is installed on the control valve body 10. The pressure display unit 15 is installed by opening a display unit mounting hole 18, which is linked to the pressure regulating passage 27, in the control valve body 10, a pressure inlet sleeve 16 with an engaging groove of the pressure display unit 15 is airtightly inserted in the mounting hole 18, and the leg of a U-shaped pin 17 that is inserted in the control valve body 10 is locked in the engaging groove thereby to install the pressure display unit 15. In the drawing, reference numeral 19a denotes a pilot air supply passage, and reference numeral 19b denotes an exhaust passage.

In the solenoid valve assembly illustrated in Fig. 2 and Fig. 3, a plurality of sets of the solenoid valve aggregates 6 formed of a plurality of juxtaposed solenoid valves 60, pressure control valves 1 for outputting a pressure fluid with the pressure thereof regulated, and supply-exhaust blocks 5 having supply ports 51 for supplying a pressure fluid from the outside and exhaust ports 52 to the outside are installed side by side and coupled by the single coupling means 7. Regarding the coupling means 7, a case is shown wherein the solenoid valve aggregates 6, the pressure control valves 1, and the supply-exhaust blocks 5 are installed side by side on a rail 71 shown in Fig. 1, and clamped between end blocks 72 provided on both ends and secured to the rail 71. In this case, the respective solenoid valves 60 in the solenoid valve aggregates 6 and the supply-exhaust blocks 5 are locked to the rail 71 by using retaining metal fixtures, and the pressure control valves 1 are locked by a retaining section 49a which is provided on a bottom cover 49 closing the bottom end of the passage linking the input port 11 and the output port 12 to the valve hole 21 and which elastically locks. The coupling means 7 is not limited to the one set forth above; other various coupling means may be adopted.

As illustrated, a plurality of sets of the supply-exhaust blocks 5, the pressure control valves 1, and the solenoid valve aggregates 6 are connected, and a different secondary pressure is set at the pressure control valve 1 for each set of the solenoid valve aggregate 6, thus making it possible to provide various fluid pressures required in fluid pressure equipment. This achieves a markedly simpler configuration compared with a case wherein the pressure control valve is provided in the passage of each solenoid valve 60. It is of course possible, however, to use one set of the supply-exhaust block 5, the pressure control valve 1, and the solenoid valve aggregate 6 that are connected.

The pressure control valve 1 having the configuration set forth above is placed between the supply-exhaust block 5 and the solenoid valve aggregate 6 having the solenoid valves 60 arranged side by side in a line to use as a solenoid valve assembly. The secondary pressure provided by the urging force of the pressure regulating spring 31 is preset by driving the pressure regulating screw 43 in or out. In the solenoid valve assembly, when a pressure fluid (compressed air) is supplied from the supply port 51 of the supply-exhaust block 5 through the input port 11, it is introduced into the pressure regulating mechanism 20 from the input port 11 in the control valve body 10, reduced to a predetermined secondary pressure set by the pressure regulating spring 31, sent from the output port 12 to the respective solenoid valves 60 through the supply passage 61 of the solenoid valve aggregate 6, and sent from the solenoid valves 60 to the respective actuators in fluid pressure equipment. The exhaust from the fluid pressure equipment is performed from the exhaust passage of the solenoid valve aggregate 6 through the exhaust passages 14 of the control valve body 10 and the exhaust port 52 of the supply-exhaust block 5.

The operation of the pressure regulating mechanism 20 will be further specifically described. First, a pressure fluid supplied from the supply port 51 of the supply-exhaust block 5 through the input port 11 in the control valve body 10 flows toward the output port 12 according to the opening of the valve member 24 opposed to the valve seat 22. The fluid pressure at the output port 12 passes through the pressure regulating passage 27 into the pressure regulating piston chamber 32 at one end of the valve hole 21 and resists the urging force of the pressure regulating spring 31 acting on the pressure regulating piston 33. Meanwhile, the fluid pressure passed through the pressure regulating passage 27 into the pressure chamber 46 on the other end of the valve hole 21 and the urging force of the spring 47 acting on the end of the pressure regulating valve rod 23 urges the valve member 24 in the direction for pressing it into contact with the valve seat 22 of the valve hole 21. The opening of the valve member 24 is set based on the balance of the aforesaid urging forces, thereby to regulate the pressure fluid passing into the output port 12 to the secondary pressure that is set by the urging force of the pressure regulating spring 31.

When the secondary pressure rises higher than the pressure set by the pressure regulating spring 31, the action of the fluid pressure moving into the pressure chamber 46 through the pressure regulating passage 27 causes the valve member 24 to close the valve seat 22 and the fluid pressure in the pressure regulating piston chamber 32 to act on the pressure regulating piston 33 to compress the pressure regulating spring 31. Thus, the fluid pressure in the pressure regulating piston chamber 32 is discharged to the outside through the relief hole 34 of the pressure regulating piston 33, the spring chamber 41, and the breather hole 45, so that the secondary pressure is regulated to a predetermined pressure. The fluid pressure is detected and displayed by the pressure display unit 15 mounted on the control valve body 10.

Thus, by providing the pressure control valve 1 between the supply-exhaust block 5 and the solenoid valve aggregate 6 composed of a plurality of juxtaposed solenoid valves 60 and by properly setting the passages of the pressure fluid, the supply-exhaust block 5 and the solenoid valve aggregate 6 that have been conventionally used can be used as they are to constitute the solenoid valve aggregate 6 that supplies pressure air, the pressure of which has been reduced.

According to the pressure control valve for a solenoid valve aggregate and a solenoid valve assembly equipped with the same in accordance with the present invention set forth above in detail, the supply-exhaust block and the solenoid valve aggregate that have conventionally been used can be employed as they are, and a pressure control valve that can be used by being placed therebetween can be provided, permitting the supply of a pressure fluid, the pressure of which has been reduced, from a plurality of solenoid valves making up the solenoid valve aggregate.

Moreover, according to the present invention, it is possible to provide a pressure control valve that allows a different secondary pressure required in fluid pressure equipment to be supplied for each set of a plurality of sets of solenoid valve aggregates by a simple means, or to provide a solenoid valve assembly that incorporates the pressure control valve.

## Claims

1. A pressure control valve (1) for supplying a fluid at a regulated pressure to a supply passage of a solenoid valve aggregate (6), the aggregate having a plurality of solenoid valves(60) arranged side by side in a line through which the supply passage (61) and a discharge passage extend and a supply-exhaust block (5) having a supply port (51) through which the pressure fluid is supplied and an exhaust port (52), the pressure control valve comprising a body (10) with an input port (11) for communication with the supply port (51) of the supply-exhaust block (5), an output port (12) for communication with the supply passage (61) of the solenoid valve aggregate (6), a pressure regulating mechanism (20) that regulates the pressure of pressure fluid supplied through the supply port (51) of the supply-exhaust block (5) and outputs the fluid at a secondary pressure to the supply passage (61) of the solenoid valve aggregate (6) through the output port (12), and an exhaust passage (14) that provides direct communication between the discharge passage of the solenoid valve aggregate and the exhaust port (52) of the supply-exhaust block (5), wherein the input port (11) and the output port (12) are provided adjacent each other through formation by a partition (13) which divides a hole extending within the control valve body (10), the input port (11) extending to one side of the valve body (10) that faces the solenoid valve aggregate (6) and the output port (12) extending to the other side of the valve body (10) that faces the supply-exhaust block (5), and wherein the valve (1) includes an end wall for closing off the input port (11) on the said one side and for closing off the output port (12) on the said other side.

2. A pressure control valve as claimed in claim 1, wherein the pressure regulating mechanism comprises a valve hole (21) provided in the control valve body (10) in parallel to a surface adjacent the solenoid valve aggregate, a pressure regulating valve rod (23) slidably inserted in the valve hole, the pressure regulating valve rod having a valve member (24) that moves into and out of contact with a valve seat (22) provided at the valve hole to open or close a passage between the input port (11) and the output port (12), and a pressure regulating spring (31) acting on the pressure regulating valve rod (23), the opening of the valve seat (22) by the valve member (24) being set according to the force of fluid pressure at the output port (12) and the force of the pressure regulating spring (31) such that the secondary pressure is regulated to the value set by the pressure regulating spring (31).

3. A solenoid valve assembly comprising a solenoid valve aggregate (6) with a plurality of solenoid valves (60) arranged side by side in a line and a supply passage (61) and a discharge passage installed therethrough, a pressure control valve (1) as claimed in either claim 1 or claim 2, a supply-exhaust block (5) that has a supply port (51) through which a pressure fluid is supplied from the outside and an exhaust port (52) to the outside, and coupling means (7) for coupling the solenoid valve aggregate, the pressure control valve, and the supply-exhaust block arranged side by side in a line.

4. A solenoid valve assembly as claimed in claim 3, wherein a plurality of sets of the solenoid valve aggregates (6), the pressure control valves (1), and the supply-exhaust blocks (5) are coupled by a single coupling means (7).

## Patentansprüche

1. Druckregelventil (1) zum Beaufschlagen eines Zufuhrkanals eines Magnetventilaggregats (6) mit einer Flüssigkeit mit einem geregelten Druck, wobei das Aggregat eine Vielzahl von nebeneinander in einer Reihe angeordneten Magnetventilen (60) aufweist, durch die der Zufuhrkanal (61) und ein Ablaufkanal hindurchführen, und einen Zufuhr-/Abfuhr-Block (5) mit einer Zufuhröffnung (51), durch die die Druckflüssigkeit zugeführt wird, und einer Auslassöffnung (52), wobei das Druckregelventil einen Körper (10) mit einer Eingangsöffnung (11) umfasst, durch die es mit der Zufuhröffnung (51) des Zufuhr-/Abfuhr-Blockes (5) in Verbindung steht, einer Ausgangsöffnung (12), durch die es mit dem Zufuhrkanal (61) des Magnetventilaggregats (6) In Verbindung steht, einem Druckregelmechanismus (20), der den Druck der Druckflüssigkeit regelt, die durch die Zufuhröffnung (51) des Zufuhr-/Abfuhr-Blockes (5) zugeführt wird, und die Flüssigkeit mit einem sekundären Druck durch die Ausgangsöffnung (12) in den Zufuhrkanal (61) des Magnetventilaggregats (6) ausstößt, und einem Abfuhrkanal (14), der für eine direkte Verbindung zwischen dem Ablaufkanal des Magnetventilaggregats und der Auslassöffnung (52) des Zufuhr-/Abfuhr-Blockes (5) sorgt, wobei die Eingangsöffnung (11) und die Ausgangsöffnung (12) nebeneinander angeordnet sind und durch eine Abtrennung (13) ausgebildet werden, die ein Loch teilt, das sich im Regelventilkörper (10) befindet, wobei sich die Eingangsöffnung (11) auf der einen Seite des Ventilkörpers (10) befindet, die zum Magnetventilaggregat (6) gerichtet ist, und die Ausgangsöffnung (12) auf der anderen Seite des Ventilkörpers (10), die zum Zufuhr-/Abfuhr-Block (5) gerichtet ist, und wobei das Ventil (1) eine Abschlusswand beinhaltet, um auf der einen Seite die Eingangsöffnung (11) abzusperren und auf der anderen Seite die Ausgangsöffnung (12) abzusperren.

2. Druckregelventil nach Anspruch 1, wobei der Druckregelmechanismus eine Ventilbohrung (21) umfasst, die im Regelventilkörper (10) parallel zu einer Fläche vorgesehen ist, die an das Magnetventilaggregat angrenzt, wobei in diese Ventilbohrung eine Druckregelventilstange (23) verschiebbar eingesetzt wird und die Druckregelventilstange mit einem Ventilelement (24) ausgestattet ist, das auf einen Ventilsitz (22) gedrückt und wieder abgehoben wird, der an der Ventilbohrung vorgesehen ist, um einen Kanal zwischen der Eingangsöffnung (11) und der Ausgangsöffnung (12) zu öffnen beziehungsweise zu schließen, und mit einer Druckregelfeder (31), die auf die Druckregelventilstange (23) wirkt, wobei das Öffnen des Ventilsitzes (22) durch das Ventilelement (24) gemäß der Kraft des Flüssigkeitsdruckes an der Ausgangsöffnung (12) und der Kraft der Druckregelfeder (31) bestimmt wird, so dass der sekundäre Druck auf den von der Druckregelfeder (31) vorgegebenen Wert geregelt wird.

3. Magnetventilanordnung, umfassend ein Magnetventilaggregat (6) mit einer Vielzahl von nebeneinander in einer Reihe angeordneten Magnetventilen (60) und einem Zufuhrkanal (61) und einem Ablaufkanal, die durch dieses hindurchführen, ein Druckregelventil (1) nach Anspruch 1 oder nach Anspruch 2, einen Zufuhr-/Abfuhr-Block (5) mit einer Zufuhröffnung (51), durch die eine Druckflüssigkeit von außen zugeführt wird, und einer Auslassöffnung (52) ins Freie, und Koppelvorrichtungen (7), um das Magnetventilaggregat, das Druckregelventil und den Zufuhr-/Abfuhr-Block, die nebeneinander in einer Reihe angeordnet sind, miteinander zu koppeln.

4. Magnetventilanordnung nach Anspruch 3, wobei eine Vielzahl von Gruppen mit den Magnetventilaggregaten (6), den Druckregelventilen (1) und den Zufuhr-/Abfuhr-Blöcken (5) durch eine einzige Koppelvorrichtung (7) miteinander gekoppelt sind.

## Revendications

1. Régulateur de pression (1) destiné à alimenter un fluide à une pression régulée vers un passage d'alimentation d'un agrégat (6) d'électrovannes, l'agrégat ayant une pluralité d'électrovannes (60) disposées côte à côte en une ligne par le biais de laquelle le passage d'alimentation (61) et un passage de déchargement se prolongent et un bloc de type alimentation-évacuation (5) ayant un port d'alimentation (51) par le biais duquel le fluide de pression est alimenté et un port d'évacuation (52), le régulateur de pression comportant un corps (10) doté d'un port d'entrée (11) pour assurer la communication avec le port d'alimentation (51) du bloc de type alimentation-évacuation (5), un port de sortie (12) pour assurer la communication avec le passage d'alimentation (61) de l'agrégat (6) d'électrovannes, un mécanisme de régulation de pression (20) qui régule la pression du fluide de pression alimenté par le biais du port d'alimentation (51) du bloc de type alimentation-évacuation (5) et qui fait sortir le fluide à une pression secondaire vers le passage d'alimentation (61) de l'agrégat (6) d'électrovannes par le biais du port de sortie (12), et un passage d'évacuation (14) qui fournit une communication directe entre le passage de déchargement de l'agrégat d'électrovannes et le port d'évacuation (52) du bloc de type alimentation-évacuation (5), dans lequel le port d'entrée (11) et le port de sortie (12) sont prévus de manière adjacente l'un près de l'autre par le biais d'une formation par une cloison (13) qui divise un trou se prolongeant à l'intérieur du corps (10) du régulateur de pression, le port d'entrée (11) se prolongeant vers un côté du corps (10) du régulateur de pression qui fait face à l'agrégat (6) d'électrovannes et le port de sortie (12) se prolongeant vers l'autre côté du corps (10) du régulateur de pression qui fait face au bloc de type alimentation-évacuation (5) et dans lequel le régulateur de pression (1) comprend une paroi d'extrémité destinée à fermer le port d'entrée (11) sur ledit un côté et destinée à fermer le port de sortie (12) sur ledit autre côté.

2. Régulateur de pression selon la revendication 1, dans lequel le mécanisme de régulation de pression comporte un trou de vanne (21) prévu dans le corps (10) du régulateur de pression de manière parallèle à une surface adjacente à l'agrégat d'électrovannes, une tige (23) du régulateur de pression insérée de manière coulissante dans le trou de vanne, la tige du régulateur de pression ayant un organe de vanne (24) qui se met en et hors contact avec un siège de vanne (22) prévu au niveau du trou de vanne pour ouvrir ou fermer un passage entre le port d'entrée (11) et le port de sortie (12), et un ressort de régulation de pression (31) agissant sur la tige (23) du régulateur de pression, l'ouverture du siège de vanne (22) par l'organe de vanne (24) étant réglée en fonction de la force de la pression du fluide au niveau du port de sortie (12) et de la force du ressort de régulation de pression (31) de telle manière que la pression secondaire est régulée selon la valeur réglée par le ressort de régulation de pression (31).

3. Assemblage d'électrovannes comportant un agrégat (6) d'électrovannes avec une pluralité d'électrovannes (60) disposées côte à côte en une ligne et un passage d'alimentation (61) et un passage de déchargement installés au travers, un régulateur de pression (1) selon l'une quelconque des revendications 1 ou 2, un bloc de type alimentation-évacuation (5) qui a un port d'alimentation (51) par le biais duquel un fluide de pression est alimenté en provenance de l'extérieur et un port d'évacuation (52) vers l'extérieur, et un moyen d'accouplement (7) destiné à accoupler l'agrégat d'électrovannes, le régulateur de pression, et le bloc de type alimentation-évacuation disposés côte à côte en une ligne.

4. Assemblage d'électrovannes selon la revendication 3, dans lequel une pluralité de jeux d'agrégats (6) d'électrovannes, de régulateurs de pression (1) et de blocs de type alimentation-évacuation (5) sont accouplés par un seul moyen d'accouplement (7).
